Europäisches Patentamt

European Patent Office

Office européen des brevets

(11) Veröffentlichungsnummer: **0 238 674 B1**

# EUROPÄISCHE PATENTSCHRIFT

(45) Veröffentlichungstag der Patentschrift: **10.06.92**

(51) Int. Cl.[5]: **F16K 11/00**

(21) Anmeldenummer: **86100817.5**

(22) Anmeldetag: **22.01.86**

Teilanmeldung 91114475.6 eingereicht am 22/01/86.

(54) **Sanitäre Mischbatterie.**

(30) Priorität: **13.07.85 DE 3525052**

(43) Veröffentlichungstag der Anmeldung:
**30.09.87 Patentblatt 87/40**

(45) Bekanntmachung des Hinweises auf die
Patenterteilung:
**10.06.92 Patentblatt 92/24**

(84) Benannte Vertragsstaaten:
**AT BE CH DE FR GB IT LI LU NL SE**

(56) Entgegenhaltungen:
DE-A- 1 550 060    DE-A- 1 949 318
DE-A- 2 413 392    DE-A- 2 804 755
DE-A- 2 804 803    US-A- 2 267 976
US-A- 4 407 444    US-A- 4 458 839

(73) Patentinhaber: **IDEAL-STANDARD GMBH
Euskirchener Strasse 80
W-5300 Bonn 1(DE)**

(72) Erfinder: **Bergmann, Konrad, Dipl.-Ing.
zur Philippsburg
W-5560 Wittlich(DE)**
Erfinder: **Läller, Klaus
Birkenhof 5
W-5309 Meckenheim-Merl(DE)**
Erfinder: **Loose, Bernd
zur Gonzlay 9
W-5580 Traben-Trarbach(DE)**

(74) Vertreter: **Gesthuysen, Hans Dieter, Dipl.-Ing.
et al
Patentanwälte Gesthuysen + von Rohr
Huyssenallee 15 Postfach 10 13 33
W-4300 Essen 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine sanitäre Mischbatterie mit Thermostatregelung, mit einem Kaltwasserzulauf, einem Warmwasserzulauf und mit einem Mischwasserzulauf, mit einer feststehenden Ventilsitzscheibe, mit einer auf der Ventilsitzscheibe zur Mengensteuerung verschiebbaren Ventilscheibe, mit einer relativ zur Ventilscheibe zur Temperaturregelung und -steuerung verschiebbaren Regelscheibe, mit einer oberhalb der Regelscheibe vorgesehenen Führungsscheibe und mit einem auf die Regelscheibe einwirkenden temperaturabhängigen Regelelement, wobei die Ventilsitzscheibe eine an den Kaltwasserzulauf angeschlossene Kaltwassereinlauföffnung und eine an den Warmwasserzulauf angeschlossene Warmwassereinlauföffnung aufweist, die Ventilscheibe mit der Kaltwassereinlauföffnung und der Warmwassereinlauföffnung der Ventilsitzscheibe kommunizierende Durchtrittsöffnungen und die Regelscheibe mit den Durchtrittsöffnungen der Ventilscheibe kommunizierende Durchtrittsöffnungen aufweisen und die Regelscheibe relativ zur Ventilscheibe zur Temperatursteuerung in eine temperaturbestimmende Ausgangslage einstellbar und zur Temperaturregelung mittels des temperaturabhängigen Regelelements steuerbar ist.

Bei der bekannten sanitären Mischbatterie, von der die Erfindung ausgeht (vgl. die US - A - 4 , 40 7, 444), liegt die Regelscheibe unter einem bestimmten Anpreßdruck auf der Ventilscheibe, wie auch die Ventilscheibe unter einem bestimmten Anpreßdruck auf der Ventilsitzscheibe liegt. Das ist ungünstig, weil die relativ geringen Temperaturregelkräfte des Regelelements nicht in der Lage sind, die Regelscheibe auch bei kleinen Temperaturabweichungen relativ zur Ventilscheibe zu verschieben. Wenn überhaupt, dann spricht die Regelscheibe erst bei relativ großen Temperaturabweichungen an, und zwar ruckartig, so daß es zu unerwünschten Regelschwingungen erheblicher Schwingungsamplituden kommt. Aus den dargelegten Gründen hat diese bekannte sanitäre Mischbatterie auch keinen Eingang in die Praxis gefunden.

Ausgehend von dem zuvor erläuterten Stand der Technik liegt der Erfindung die Aufgabe zugrunde, die bekannte sanitäre Mischbatterie, von der die Erfindung ausgeht, so auszugestalten und weiterzubilden, daß auch relativ geringe Temperaturabweichungen ohne weiteres ausgeregelt werden können.

Die erfindungsgemäße sanitäre Mischbatterie, bei der die zuvor aufgezeigte Aufgabe gelöst, ist dadurch gekennzeichnet, daß die Ventilscheibe, die Regelscheibe und die Führungsscheibe zu einem Scheibenpaket zusammengefaßt sind und eine auf der Ventilsitzscheibe verschiebliche Baueinheit bilden und daß zwischen der Ventilscheibe und der Führungsscheibe Distanzstücke vorgesehen sind und dadurch einerseits zwischen der Ventilscheibe und der Regelscheibe, andererseits zwischen der Regelscheibe und der Führungsscheibe ein geringes Paßspiel verwirklicht ist.

Erfindungsgemäß ist erkannt worden, daß bei einer sanitären Mischbatterie der hier in Rede stehenden Art, also einer sanitären Mischbatterie mit Mengensteuerung einerseits sowie Temperatursteuerung und -regelung andererseits, nur zwischen der Ventilscheibe und der Ventilsitzscheibe eine Abdichtung im eigentlichen Sinn erreicht werden also nur zwischen der Ventilscheibe und der Ventilsitzscheibe ein bestimmte Anpreßdruck sichergestellt sein muß, also zwischen der Regelscheibe und der Ventilscheibe eine Abdichtung im eigentlichen Sinn nicht erforderlich ist, folglich auch hier kein Anpreßdruck vorhanden sein muß, also einerseits zwischen der Ventilscheibe und der Regelscheibe, andererseits zwischen der Regelscheibe und der Führungsscheibe ein geringes Paßspiel verwirklicht sein kann. Dadurch, daß zwischen der Ventilscheibe und der Regelscheibe einerseits, der Regelscheibe und der Führungsscheibe andererseits ein geringes Paßspiel verwirklciht ist, also die Regelscheibe beidseits ohne Anpreßdruck ist, sind zur temperaturregelnden Verschiebung der Regelscheibe relativ zur Ventilscheibe nur relativ geringe Temperaturregelkräfte erforderlich, die von dem temperaturabhängigen Regelelement auch bereits bei kleinen Temperaturabweichungen erzeugt werden. Die Folge ist eine in der Praxis funktionstüchtige sanitäre Mischbatterie mit Thermostategelung, die insbesondere auch relativ geringe Temperaturabweichungen ohne weiteres ausregelt.

Zur Lehre der Erfindung gehört, daß zwischen der Ventilscheibe und der Führungsscheibe Distanzstücke vorgesehen sind. Das können separate Bauteile sein. Vorzugsweise sind jedoch die Ventilscheibe, die Führungsscheibe und die Distanzstücke einstückig ausgebildet.

Für die erfindungsgemäße sanitäre Mischbatterie ist es von besonderem Vorteil, wenn die Führungsscheibe mit den Durchtrittsöffnungen der Regelscheibe kommunizierende Ausnehmungen aufweist, die Querschnitte der Ausnehmungen in der Führungsscheibe den Querschnitten der Durchtrittsöffnungen der Ventilscheibe entsprechen und die Ausnehmungen in der Führungsscheibe Druckausgleichskammern für Teilmengen kalten Wassers und des warmen Wassers bilden, das von den Durchtrittsöffnungen der Ventilscheibe über die Durchtrittsöffnungen der Regelscheibe und die Ausnehmungen in der Führungsscheibe in einen Wasserraum strömt. Damit ist dafür gesorgt, daß auf die Regelscheibe resultierend hydraulische Kräfte nicht wirksam sind.

Vorzugsweise gilt für die erfindungsgemäße sanitäre Mischbatterie, wie im Stand der Technik bekannt, daß das temperaturabhängige Regelelement im Wasserraum angeordnet ist und an einem Ende der Regelscheibe angreift und das dem temperaturabhängigen Regelelement ferne Ende der Regelscheibe durch eine Rückstellfeder belastet ist.

Fertigungstechnisch und funktionell optimal ist eine Ausführungsform der erfindungsgemäßen sanitären Mischbatterie, die desweiteren dadurch gekennzeichnet ist, daß zu der verschieblichen Baueinheit auch das Regelelement und die Rückstellfeder gehören.

Im folgenden wird nun die Erfindung und werden Ausgestaltungen und Weiterbildungen der Erfindung anhand einer lediglich ein Ausführungsbeispiel darstellenden Zeichnung weiter erläutert; es zeigt

Fig. 1     einen Längsschnitt durch eine bevorzugte Ausführungsform einer erfindungsgemäßen sanitären Mischbatterie mit Thermostatsteuerung,

Fig. 2     einen Schnitt durch die Mischbatterie nach Fig. 1 längs der Linie II - II,

Fig. 3     einen Schnitt durch die Mischbatterie nach Fig. 1 längs der Linie III - III und

Fig. 4     in einer Explosionsdarstellung einen Teil der funktionswesentlichen Bauteile der Mischbatterie nach Fig. 1.

Die in den Figuren dargestellte sanitäre Mischbatterie ist ein sogenannter Einzelthermostat, d. h. daß die Mengensteuerung einerseits und die Temperatursteuerung und -regelung andererseits an der Verbrauchsstelle erfolgen. Zu der dargestellten sanitären Mischbatterie mit Thermostatregelung gehören zunächst ein Kaltwasserzulauf 5, ein Warmwasserzulauf 6 und ein Mischwasserzulauf 7. In Strömungsrichtung gesehen folgt dem Kaltwasserzulauf 5 und dem Warmwasserzulauf 6 eine feststehende Ventilsitzscheibe 8, die eine an den Kaltwasserzulauf 5 angeschlossene Kaltwassereinlauföffnung 9 und eine an den Warmwasserzulauf 6 angeschlossene Warmwassereinlauföffnung 10 aufweist. Auf der Ventilsitzscheibe 8 ist eine zur Mengensteuerung verschiebbare Ventilscheibe 11 vorgesehen, die mit der Kaltwassereinlauföffnung 9 und der Warmwassereinlauföffnung 10 der Ventilsitzscheibe 8 kommunizierende Durchtrittsöffnungen 12, 13 aufweist. Der Ventilscheibe 11 folgt, wiederum in Strömungsrichtung gesehen, eine relativ zur Ventilscheibe 11 zur Temperatursteuerung und -regelung verschiebbare Regelscheibe 14 und der Regelscheibe 14 eine Führungsscheibe 15. Die Regelscheibe 14 weist mit den Durchtrittsöffnungen 12, 13 der Ventilscheibe 8 kommunizierende Durchtrittsöffnungen 16, 17 auf und ist relativ zur Ventilscheibe 11 zur Temperatursteuerung in eine temperaturbestimmende Ausgangslage einstellbar und zur Temperaturregelung steuerbar.

Für die erfindungsgemäße Mischbatterie gilt, daß die Ventilscheibe 11, die Regelscheibe 14 und die Führungsscheibe 15 zu einem Scheibenpaket zusammengefaßt sind und eine auf der Ventilsitzscheibe 8 verschiebliche Baueinheit bilden und daß zwischen der Ventilscheibe 11 und der Führungsscheibe 15 Distanzstücke 53 vorgesehen sind und dadurch einerseits zwischen der Ventilscheibe 11 und der Regelscheibe 14, andererseits zwischen der Regelscheibe 14 und der Führungsscheibe 15 ein geringes Paßspiel verwirklicht ist.

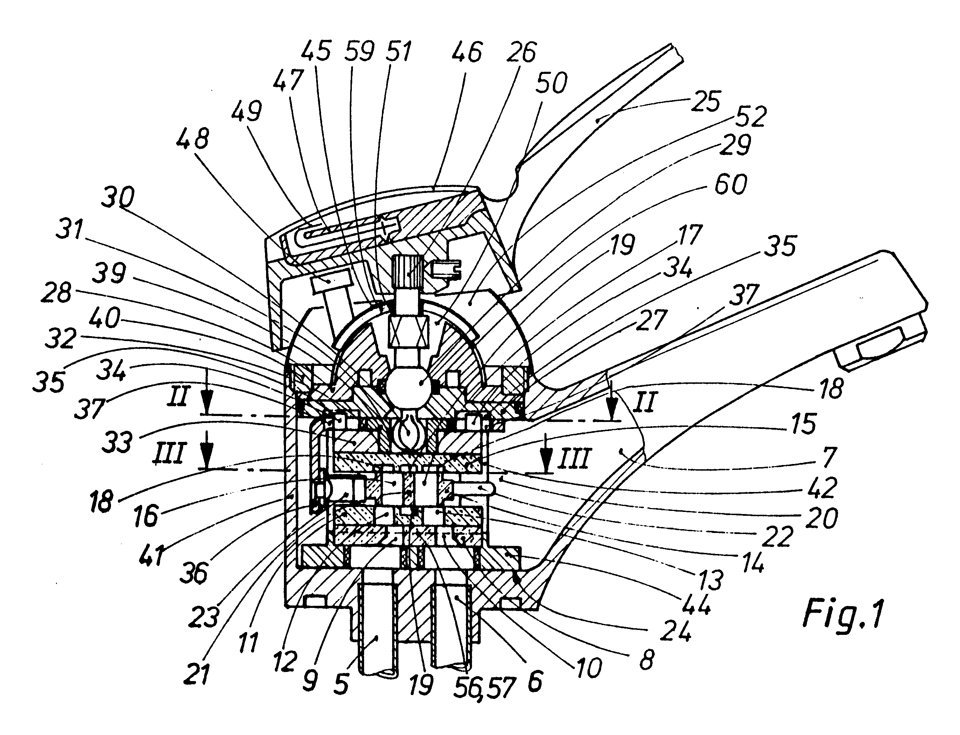

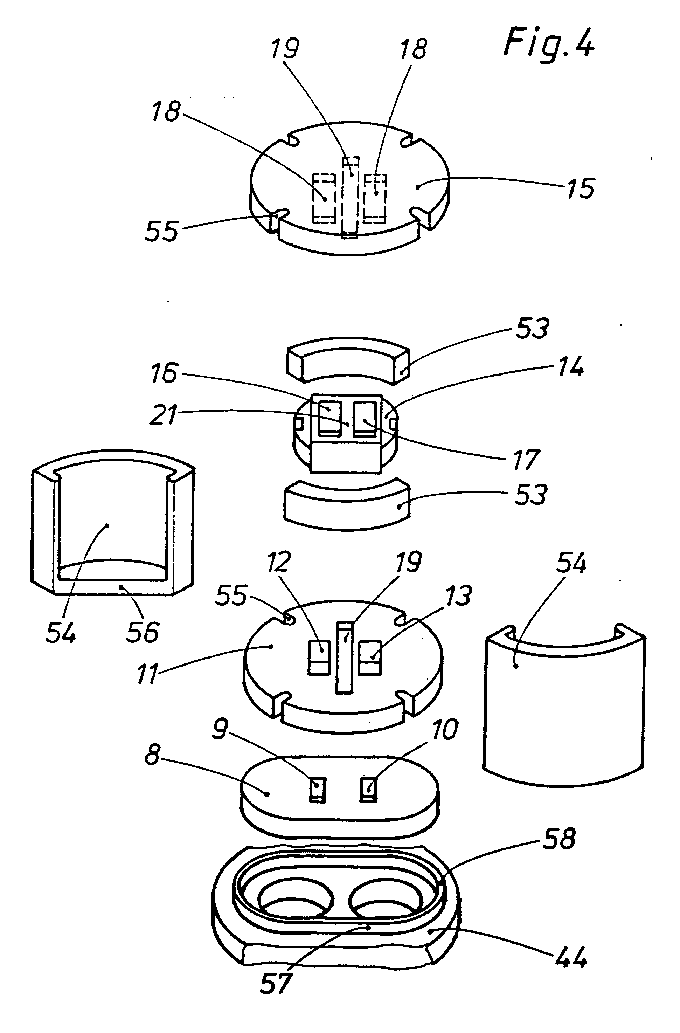

Insbesondere den Fig. 1 und 4 kann entnommen werden, daß im dargestellten Ausführungsbeispiel die Führungsscheibe 15 mit den Durchtrittsöffnungen 16, 17 der Regelscheibe 14 kommunizierende Ausnehmungen 18 aufweist, die Querschnitte der Ausnehmungen 18 in der Führungsscheibe 15 den Querschnitten der Durchtrittsöffnungen 12, 13 der Ventilscheibe 11 entsprechen und die Ausnehmungen 18 in der Führungsscheibe 15 Druckausgleichskammern für Teilmengen des kalten Wassers und des warmen Wassers bilden, das von den Durchtrittsöffnungen 12, 13 der Ventilscheibe 11 über die Durchtrittsöffnungen 16, 17 der Regelscheibe 14 und die Ausnehmungen 18 in der Führungsscheibe 15 in einen Wasserraum 20 strömt. Im einzelnen sind die Durchtrittsöffnungen 16, 17 der Regelscheibe 14 durch einen Steg 21 voneinander getrennt und wirkt der Steg 21 mit Druckausgleichskammern in Form von Ausnehmungen 19 in der Ventilscheibe 11 und in der Führungsscheibe 15 für Teilmengen des kalten Wassers und des warmen Wassers zusammen. Die Ausnehmungen 18, 19 bilden Abströmkammern und sind mit dem Wasserraum 20 verbunden.

Bei der erfindungsgemäßen sanitären Mischbatterie ist zur Temperaturregelung ein auf die Regelscheibe 14 einwirkendes temperaturabhängiges Regelelement 22 vorgesehen. Das Regelelement 22 ist im Wasserraum 20 angeordnet und greift an einem Ende der Regelscheibe 14 an. Das dem temperaturabhängigen Regelelement 22 ferne Ende der Regelscheibe 14 ist durch eine Rückstellfeder 23 belastet. Zu der auf der Ventilsitzscheibe 8 - durch ein Betätigungsorgan 25 - verschieblichen Baueinheit gehören auch das Regelelement 22 und die Rückstellfeder 23. Im übrigen sind, wie die Fig. 1 zeigt, die Ventilsitzscheibe 8, die Ventilscheibe 11, die Regelscheibe 14, das Regelelement 22, die Rückstellfeder 23 und die Führungsscheibe 15 in einer Kartusche 24 angeordnet.

Wie insbesondere die Fig. 4 zeigt, sind im dargestellten Ausführungsbeispiel die Ausnehmungen 19 in der Ventilscheibe 11 und in der Führungsscheibe 15 in ihrer Längenausdehnung größer als der Durchmesser der Regelscheibe 14; sie könnten auch als voll durchlaufende Vertiefungen ausgebildet sein. Denkbar sind aber auch Ausführungsformen, bei denen keine oder nur einzelne Ausnehmungen mit dem Wasserraum in Verbindung stehen. In diesem Fall würden die nicht mit dem Wasserraum in Verbindung stehenden Ausnehmungen Druckausgleichskammern bilden mit einer Länge, die kleiner wäre als der Durchmesser der Regelscheibe. Man könnte also wahlweise nur bestimmte der möglichen Wasserwege unter Wahrung des hydrostatischen Gleichgewichts benutzen. Es ist denkbar, nur je einen mit dem Wasserraum verbundenen Kaltwasserweg und nur einen mit dem Wasserraum verbundenen Warmwasserweg vorzusehen und z. B. nur zwei entsprechend dimensionierte Druckausgleichskammern in der Form zweier Ausnehmungen zu verwirklichen. Sowohl eine solche Ausführungsform als auch Ausführungsformen, bei denen die Ausnehmungen als voll durchlaufende Vertiefungen ausgebildet sind, würden besonders kleine Baumaße ermöglichen.

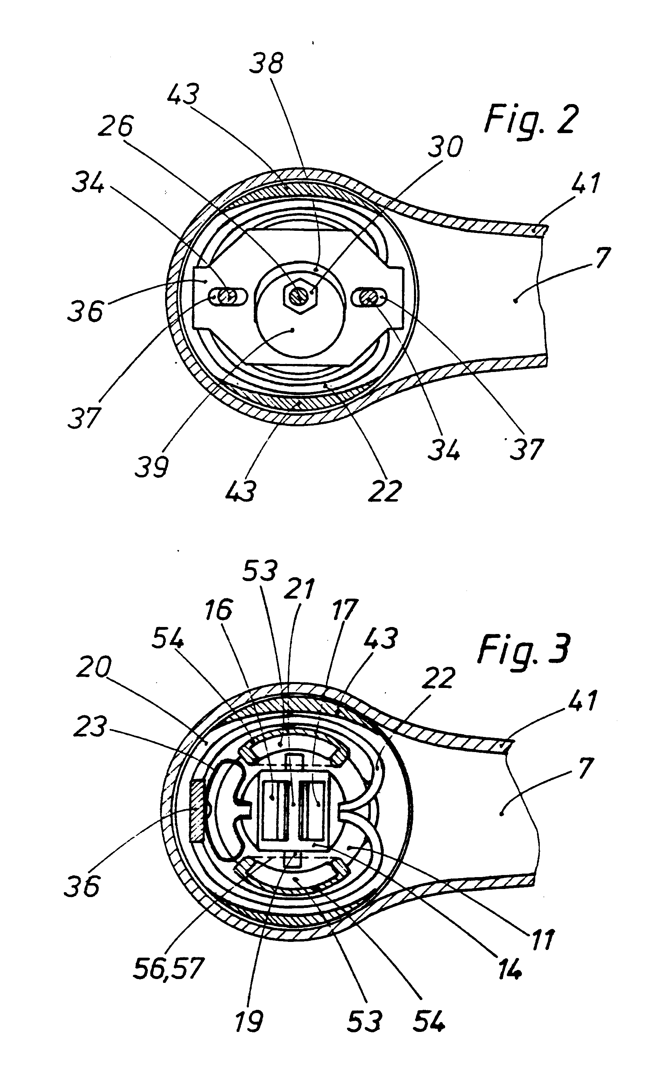

Im dargestellten Ausführungsbeispiel gilt, was insbesondere die Fig. 3 zeigt, daß das Regelelement 22 die Kartusche teilweise umgibt und als bogenförmig gestaltetes Bimetall ausgeführt ist.

Die in den Figuren dargestellte sanitäre Mischbatterie mit Thermostatregelung weist nur ein Betätigungsorgan 25 auf, das sowohl für die Mengensteuerung als auch für die Temperatursteuerung verwendet wird; es handelt sich um ein Betätigungsorgan 25, das zweifach schwenkbar ist, nämlich zur Mengensteuerung um eine waagerechte Nebenachse und zur Temperatursteuerung um die senkrechte Hauptachse. An dem Betätigungsorgan 25, das also kipp- und schwenkbar ist, ist ein Steuerhebel 26 befestigt; mittels des Steuerhebels 26 sind die Ventilscheibe 11 zur Mengensteuerung und die Regelscheibe 14 zur Temperatursteuerung betätigbar. Der Steuerhebel 26 ist in einem die Mischbatterie dicht verschließenden, aus einem Unterteil 27 und einem Oberteil 28 bestehenden Deckel gelagert und weist für die Lagerung in seinem mittleren Bereich ein Kugelelement 29 auf. Das untere Ende 30 des Steuerhebels 26, das im Achsnormalschnitt sechskantig gestaltet ist, aber auch walzenförmig sein können, ist in einer Buchse 31 gelagert, die in einer Öffnung 32 einer an dem Deckel anliegenden und relativ zu dem Dekkel geradlinig verschieblichen Trägerplatte 33 drehbar gehalten ist. Die Trägerplatte 33 ist mit der die Ventilscheibe 11 beinhaltenden und auf der Ventilsitzscheibe 8 verschieblichen, eine Baueinheit bildenden Thermostatregelung fest verbunden und über Vorsprünge 34 in länglichen Ausnehmungen 35 des Unterteils 27 des Deckels geführt. Am Unterteil 27 des Deckels liegt ein die Trägerplatte 33 übergreifender Bügel 36 an, der geradlinig verschieblich ist und zu seiner Führung Langlöcher 37

für den Durchtritt der Vorsprünge 34 der Trägerplatte 33 und eine mittige Öffnung 38 für die Aufnahme eines zwischen der Trägerplatte 33 und dem Deckel festgehaltenen Flansches 39 der Buchse 31 aufweist. Der Flansch 39 der Buchse 31 ist im Verhältnis zur Längachse der Buchse 31 außermittig angeordnet und bildet einen kreisförmigen Exzenter, mit dem der Bügel 36 relativ zur Ventilscheibe 31 verschieblich ist. Schließlich greift der Bügel 36 über das Regelelement 22 und die Rückstellfeder 23 an der Regelscheibe 14 an.

Aus der bisher gegebenen Erläuterung des in den Figuren dargestellten Ausführungsbeispiels einer erfindungsgemäßen sanitären Mischbatterie ergibt sich, daß die Mengensteuerung sowie die Temperatursteuerung und -regelung geradlinig auf parallel zueinander verlaufenden Bewegungsachsen erfolgen.

Wie nun desweiteren die Fig. 1 zeigt, gilt für das dargestellte Ausführungsbeispiel, daß der - aus dem Unterteil 27 und dem Oberteil 28 bestehende - Deckel Bestandteil der Kartusche 24 ist und der Deckel und damit die Kartusche 24 mittels eines Schraubringes 40 in dem Mischbatteriekörper 41 befestigt sind. Die Kartusche 24 weist eine mit Durchtrittsöffnungen 42 für das Wasser versehene Hülse 43 auf, die sowohl mit dem Unterteil 27 des Deckels als auch mit dem Boden 44 der Kartusche 24 verschweißt ist.

Im dargestellten Ausführungsbeispiel bestehen die Ventilsitzscheibe 8, die Ventilscheibe 11, die Regelscheibe 14 und die Führungsscheibe 15 aus keramischem Material, vorzugsweise aus Aluminiumoxid; die einander zugewandten Flächen sind poliert. Statt keramischem Material könnte man auch einen thermoplastischen oder einen duroplastischen Kunststoff mit einem hohen Anteil eines mineralischen Füllmaterials verwenden. Ein solcher Kunststoff ist spröde, schwingungsarm, kalkabweisend und nicht quellend. Im übrigen könnten auch die einander zugewandten Flächen der Ventilsitzscheibe 8, der Ventilscheibe 11, der Regelscheibe 14 und der Führungsscheibe 15 eine Kunststoffbeschichtung aufweisen, vorzugsweise aus Polytetrafluoräthylen.

Um bei der in den Figuren dargestellten sanitären Mischbatterie zu verhindern, daß über den Bereich der Lagerung des Steuerhebels 26 Schmutz eindringen kann, durchdringt der Steuerhebel 26 oberhalb des Oberteils 28 des Deckels eine Abdeckklappe 45, die den Steuerhebel 26 dicht umschließt und mit dem Steuerhebel kipp- und schwenkbar ist.

Auf dem Betätigungsorgan 25 befindet sich unter einer kappenförmigen Klarsichtabdeckung 46 eine Temperaturskala 47, die mit dem Betätigungsorgan 25 unter einem als Gegenmarkierung dienenden und durch einen Magneten 48 in seiner Position festgehaltenen Zeiger 49 drehbar ist. Der Magnet 48 ist an der Abdeckklappe 45 gehalten, die ihrerseits mit einer den Steuerhebel 26 im oberen Bereich umgebenden Buchse 51 einstückig ausgebildet, entsprechend der seitlichen Ausdehnung einer Öffnung 50 kippbar und drehfest angeordnet ist. Für die drehfeste Anordnung der Buchse 51 und damit der Abdeckkappe 45 ist im dargestellten Ausführungsbeispiel an der Abdeckkappe 45 eine Führungsrippe 59 vorgesehen, die in eine Führungsrille 60 des Oberteils 28 des Deckels eingreift.

Wie zuvor ausgeführt, ist die Temperaturskala 47 auf der kappenförmigen Klarsichtabdeckung 46 verwirklicht. Sie könnte sich aber auch auf dem Mischbatteriekörper 41 oder auf einer Abdeckrossette 52 gefinden, die zwischen dem Mischbatteriekörper 41 und dem Betätigungsorgan 25 vorgesehen ist.

Wesentlich für die erfindungsgemäße sanitäre Mischbatterie ist, daß zwischen der Ventilscheibe 11 und der Regelscheibe 14 einerseits, der Regelscheibe 14 und der Führungsscheibe 15 andererseits ein geringes Paßspiel verwirklicht ist. Das ist im dargestellen Ausführungsbeispiel dadurch realisiert, daß zwischen der Ventilscheibe 11 und der Führungsscheibe 15 als separate Bauteile ausgeführte Distanzstücke 53 vorgesehen sind; die Ventilscheibe, die Führungsscheibe und die Distanzstücke könnten einstückig ausgebildet sein. Für das dargestellte Ausführungsbeispiel gilt jedoch, daß die Ventilscheibe 11 und die Führungsscheibe 15 mit Ausnehmungen 55 versehen sind, Klammern 54 vorgesehen sind und die Klammern 54 in die Ausnehmungen 55 von Ventilscheibe 11 und Führungsscheibe 15 eingreifen. Die Klammern 54 durchgreifen zunächst die Ausnehmungen 55 der Führungsscheibe 15 und sind mit der Trägerplatte 33 fest verbunden. Außerdem gilt, daß die Klammern 54 die Ausnehmungen 55 der Ventilscheibe 11 durchgreifen und unten geradlinige Führungsflächen 56 für die Baueinheit aus der Ventilscheibe 11, der Regelscheibe 14, dem Regelelement 22, der Rückstellfeder 23 und der Führungsscheibe 15 aufweisen und die Führungsflächen 56 der Klammern 54 mit entsprechenden Führungsflächen 57 am Boden 44 der Kartusche 24 zusammenwirken. Dabei sind die Führungsflächen 57 am Boden 44 der Kartusche 24 an einer umlaufenden, die Ventilsitzscheibe 8 dicht umschließenden Rippe 58 ausgebildet, die die Ventilsitzscheibe 8 gegen Verdrehen sichert. Die Führungsflächen 56, 57 sind im übrigen Teil einer Schwalbenschwanzführung.

**Patentansprüche**

1. Sanitäre Mischbatterie mit Thermostatregeling, mit einem Kaltwasserzulauf (5), einem Warmwasserzulauf (6) und einem Mischwasserzulauf (7), mit einer feststehenden Ventilsitzscheibe (8), mit einer auf der Ventilsitzscheibe (8) zur Mengensteuerung verschiebbaren Ventilscheibe (11), mit einer relativ zur Ventilscheibe (11) zur Temperatursteuerung und -regelung verschiebbaren Regelscheibe (14), mit einer oberhalb der Regelscheibe (14) vorgesehenen Führungsscheibe (15) und mit einem auf die Regelscheibe (14) einwirkenden temperaturabhängigen Regelelement (22), wobei die Ventilsitzscheibe (8) eine an den Kaltwasserzulauf (5) angeschlossene Kaltwassereinlauföffnung (9) und eine an den Warmwasserzulauf (6) angeschlossene Warmwassereinlauföffnung (10) aufweist, die Ventilscheibe (11) mit der Kaltwassereinlauföffnung (9) und der Warmwassereinlauföffnung (10) der Ventilsitzscheibe (8) kommunizierende Durchtrittsöffnungen (12, 13) und die Regelscheibe (14) mit den Durchtrittsöffnungen (12, 13) der Ventilscheibe (11) kommunizierende Durchtrittsöffnungen (16, 17) aufweisen und die Regelscheibe (14) relativ zur Ventilscheibe (11) zur Temperatursteuerung in eine temperaturbestimmende Ausgangslage einstellbar und zur Temperaturregelung mittels des temperaturabhängigen Regelelements (22) steuerbar ist, **dadurch gekennzeichnet,** daß die Ventilscheibe (11), die Regelscheibe (14) und die Führungsscheibe (15) zu einem Scheibenpaket zusammengefaßt sind und eine auf der Ventilsitzscheibe (8) verschiebliche Baueinheit bilden und daß zwischen der Ventilscheibe (11) und der Führungsscheibe (15) Distanzstücke (53) vorgesehen sind und dadurch einerseits zwischen der Ventilscheibe (11) und der Regelscheibe (14), andererseits zwischen der Regelscheibe (14) und der Führungsscheibe (15) ein geringes Paßspiel verwirklicht ist.

2. Sanitäre Mischbatterie nach Anspruch 1, dadurch gekennzeichnet, daß die Ventilscheibe, die Führungsscheibe und die Distanzstücke einstückig ausgebildet sind.

3. Sanitäre Mischbatterie nach Anspruch 2, dadurch gekennzeichnet, daß die Ventilscheibe (11) und die Führungsscheibe (15) mit Ausnehmungen (55) versehen sind, Klammern (54) vorgesehen sind und die Klammern (54) in die Ausnehmungen (55) von Ventilscheibe (11) und Führungsscheibe (15) eingreifen.

4. Sanitäre Mischbatterie nach einem der Ansprüche 1 bis 3, dadurch gekennzeichnet, daß die Führungsscheibe (15) mit den Durchtrittsöffnungen (16, 17) der Regelscheibe (14) kommunizierende Ausnehmungen (18) aufweist, die Querschnitte der Ausnehmungen (18) in der Führungsscheibe (15) den Querschnitten der Durchtrittsöffnungen (12, 13) der Ventilscheibe (11) entsprechen und die Ausnehmungen (18) in der Führungsscheibe (15) Druckausgleichskammern für Teilmengen des kalten Wassers und des warmen Wassers bilden, das von den Durchtrittsöffnungen (12, 13) der Ventilscheibe (11) über die Durchtrittsöffnungen (16, 17) der Regelscheibe (15) und die Ausnehmungen (18) in der Führungsscheibe (15) in einen Wasserraum (20) strömt.

5. Sanitäre Mischbatterie nach Anspruch 4, dadurch gekennzeichnet, daß die Durchtrittsöffnungen (16, 17) der Regelscheibe (14) durch mindestens einen Steg (21) voneinander getrennt sind und der Steg (21) mit Druckausgleichskammern in Form von Ausnehmungen (19) in der Ventilscheibe (11) und in der Führungsscheibe (15) für Teilmengen des kalten Wassers und des warmen Wassers zusammenwirkt.

6. Sanitäre Mischbatterie nach Anspruch 5, dadurch gekennzeichnet, daß die Ausnehmungen (19) mindestens teilweise Abströmkammern bilden und mit dem Wasserraum (20) verbunden sind.

7. Sanitäre Mischbatterie nach einem der Ansprüche 1 bis 6, dadurch gekennzeichnet, daß das temperaturabhängige Regelelement (22) im Wasserraum (20) angeordnet ist und an einem Ende der Regelscheibe (14) angreift.

8. Sanitäre Mischbatterie nach Anspruch 7, dadurch gekennzeichnet, daß das dem temperaturabhängigen Regelelement (22) ferne Ende der Regelscheibe (14) durch eine Rückstellfeder (23) belastet ist.

9. Sanitäre Mischbatterie nach einem der Ansprüche 1 bis 8, dadurch gekennzeichnet, daß zu der verschieblichen Baueinheit auch das Regelelement (22) und die Rückstellfeder (23) gehören.

10. Sanitäre Mischbatterie nach einem der Ansprüche 1 bis 9, dadurch gekennzeichnet, daß die Ventilsitzscheibe (8), die Ventilscheibe (11), die Regelscheibe (14), das Regelelement (22) zumindest teilweise, ggf. die Rückstellfeder (23) und die Führungsscheibe (15) in einer Kartusche (24) angeordnet sind.

11. Sanitäre Mischbatterie nach Anspruch 10, dadurch gekennzeichnet, daß das Regelelement (22) die Kartusche (24) zumindest teilweise umgibt.

12. Sanitäre Mischbatterie nach Anspruch 11, dadurch gekennzeichnet, daß das Regelelement (22) als bogenförmig gestaltetes Bimetall ausgeführt ist.

13. Sanitäre Mischbatterie nach einem der Ansprüche 1 bis 12, dadurch gekennzeichnet, daß das Betätigungsorgan (25) kipp- und schwenkbar ist, an dem Betätigungsorgan (25) ein Steuerhebel (26) befestigt ist und mittels des Steuerhebels (26) die Ventilscheibe (11) zur Mengensteuerung und die Regelscheibe (14) zur Temperatursteuerung betätigbar sind.

14. Sanitäre Mischbatterie nach Anspruch 13, dadurch gekennzeichnet, daß der Steuerhebel (26) in einem die Mischbatterie dicht verschließenden, aus einem Unterteil (27) und einem Oberteil (28) bestehenden Deckel gelagert ist und für die Lagerung in seinem mittleren Bereich ein Kugelelement (29) aufweist, daß das untere Ende (30) des Steuerhebels (26) in einer in einer Öffnung (32) einer an den Deckel anliegenden und relativ zu dem Deckel geradlinig verschieblichen Trägerplatte (33) drehbar gehaltenen Buchse (31) gelagert ist und daß die Trägerplatte (33) mit der die Ventilscheibe (11) beinhaltenden und auf der Ventilsitzscheibe (8) verschieblichen, eine Baueinheit bildenden Thermostatregelung fest verbunden ist.

15. Sanitäre Mischbatterie nach Anspruch 14, dadurch gekennzeichnet, daß die Trägerplatte (33) über Vorsprünge (34) in länglichen Ausnehmungen (35) des Unterteils (27) des Deckels geführt ist, daß am Unterteil (27) des Deckels ein die Trägerplatte (33) übergreifender Bügel (36) anliegt, daß der Bügel (36) geradlinig verschieblich ist und zu seiner Führung Langlöcher (37) für den Durchtritt der Vorsprünge (34) der Trägerplatte (33) und eine mittlere Öffnung (38) für die Aufnahme eines zwischen der Trägerplatte (33) und dem Deckel festgehaltenen Flansches (39) der Buchse (31) aufweist, daß der Flansch (39) der Buchse (31) im Verhältnis zur Längsachse der Buchse (31) außermittig angeordnet ist und einen kreisförmigen Exzenter bildet, daß mittels des Exzenters der Bügel (36) relativ zur Ventilscheibe (11) verschieblich ist und daß der Bügel (36) über das Regelelement (22) und die Rückstellfeder (23) an der Regelscheibe (14) angreift.

**16.** Sanitäre Mischbatterie nach einem der Ansprüche 10 bis 15, dadurch gekennzeichnet, daß der Deckel Bestandteil der Kartusche (24) ist.

**17.** Sanitäre Mischbatterie nach einem der Ansprüche 10 bis 16, dadurch gekennzeichnet, daß der Deckel und damit die Kartusche (24) mittels eines Schraubringes (40) in dem Mischbatteriekörper (41) befestigt sind.

**18.** Sanitäre Mischbatterie nach einem der Ansprüche 10 bis 17, dadurch gekennzeichnet, daß die Kartusche (24) eine mit Durchtrittsöffnungen (42) für das Wasser versehene Hülse (42) aufweist und die Hülse (43) sowohl mit dem Unterteil (27) des Deckels als auch mit dem Boden (44) der Kartusche (24) verbunden ist.

**19.** Sanitäre Mischbatterie nach einem der Ansprüche 3 bis 18, dadurch gekennzeichnet, daß die Klammern (54) die Ausnehmungen (55) der Führungsscheibe (15) durchgreifen und mit der Trägerplatte (33) fest verbunden sind.

**20.** Sanitäre Mischbatterie nach einem der Ansprüche 9 bis 19, dadurch gekennzeichnet, daß die Klammern (54) die Ausnehmungen (55) der Ventilscheibe (11) durchgreifen und unten geradlinige Führungsflächen (56) für die Baueinheit aus der Ventilscheibe (11), der Regelscheibe (14), dem Regelelement (22), der Rückstellfeder (33) und der Führungsscheibe (15) aufweisen und die Führungsflächen (56) der Klammern (54) mit entsprechenden Führungsflächen (57) am Boden (44) der Kartusche (24) zusammenwirken.

**21.** Sanitäre Mischbatterie nach Anspruch 20, dadurch gekennzeichnet, daß die Führungsflächen (57) am Boden (44) der Kartusche (24) an einer umlaufenden, die Ventilsitzscheibe (8) direkt umschließenden Rippe (58) ausgebildet sind und die Rippe (58) die Ventilsitzscheibe (8) gegen Verdrehen sichert.

**22.** Sanitäre Mischbatterie nach Anspruch 20 oder 21, dadurch gekennzeichnet, daß die Führungsflächen (56, 57) Teil einer Schwalbenschwanzführung sind.

**Claims**

**1.** A sanitary mixing tap with thermostatic control, with a cold water supply (5), a hot water supply (6) and a mixed water supply (7), with a stationary valve seating disc (8), with a valve disc (11) slidable on the valve seating disc (8) for the control of volume, with a regulating disc (14) slidable relatively to the valve disc (11) for the control and regulation of temperature, with a guide disc (15) provided above the regulating disc (14) and with a temperature-dependent regulating unit (22) acting on the regulating disc (14), in which the valve seating disc (8) possesses a cold water inlet opening (9) attached to the cold water supply (5) and a hot water inlet opening (10) attached to the hot water supply (6), the valve disc (11) possesses passage openings (12, 13) communicating with the cold water inlet opening (9) and the hot water inlet opening (10) of the valve seating disc (8) and the regulating disc (14) possesses passage openings (16, 17) communicating with the passage openings (12, 13) of the valve disc (11) and the regulating disc (14) is adjustable relatively to the valve disc (11) in a temperature-determining output setting and is controllable for temperature regulation by means of the temperature-dependent regulating unit (22), *characterized in that* the valve disc (11), the regulating disc (14) and the guide disc (15) are combined as a pack of discs and form a constructional unit that can be slid on the valve seating disc (8), and that distance pieces (53) are provided between the valve disc (11) and the guide disc (15) and thereby a small clearance play is created between the valve disc (11) and the regulating disc (14) on one hand, and between the regulating disc (14) and the guide disc (15) on the other hand.

**2.** A sanitary mixing tap according to Claim 1, *characterized in that* the valve disc, the guide disc and the distance pieces are constructed in one piece.

**3.** A sanitary mixing tap according to Claim 2, *characterized in that* the valve disc (11) and the guide disc (15) are provided with recesses (55), clamps (54) are provided, and the clamps (54) engage into the recesses (55) of the valve disc (11) and the guide disc (15).

**4.** A sanitary mixing tap according to one of Claims 1 to 3, *characterized in that* the guide disc (15) possesses recesses (18) communicating with the passage openings (16, 17) of the regulating disc (14), the sections of the recesses (18) in the guide disc (15) corresponding to the sections of the passage openings (12, 13) of the valve disc (11), and the recesses (18) in the guide disc (15) forming pressure equalization chambers for portions of the cold water and the hot water that flow from the passage openings (12, 13) of the valve disc (11) through the passage openings (16, 17) of the regulating disc (14) and the recesses in the guide disc (15) into a water space (20).

5. A sanitary mixing tap according to Claim 4, *characterized in that* the passage openings (16, 17) of the regulating disc (14) are separated from one another by at least one fillet (21) and the fillet (21) works in conjunction with pressure equalization chambers in the form of recesses (19) in the valve disc (11) and in the guide disc (15) for portions of the cold water and the hot water.

6. A sanitary mixing tap according to Claim 5, *characterized in that* the recesses (19) at least partially form discharge chambers and are connected to the water space (20).

7. A sanitary mixing tap according to one of Claims 1 to 6, *characterized in that* the temperature-dependent regulating unit (22) is located in the water space (20) and engages into one end of regulating disc (14).

8. A sanitary mixing tap according to Claim 7, *characterized in that* the end of regulating disc (14) that is remote from the temperature-dependent regulating unit (22) is loaded by a return spring (23).

9. A sanitary mixing tap according to one of Claims 1 to 8, characterized in that the regulating unit (22) and the return spring (23) form part of the slidable structural component.

10. A sanitary mixing tap according to one of Claims 1 to 9, *characterized in that* the valve seating disc (8), the valve disc (11), the regulating disc (14), the regulating unit (22) at least partially, possibly the return spring (23) and the guide disc (15) are located in a cartouche (24).

11. A sanitary mixing tap according to Claim 10, *characterized in that* the regulating unit (22) at least partially surrounds the cartouche (24).

12. A sanitary mixing tap according to Claim 11, *characterized in that* the regulating unit (22) is constructed as an arch-shaped bimetallic strip.

13. A sanitary mixing tap according to one of Claims 1 to 12*, characterized in that* the actuating device (25) is tiltable and swingable, a control lever (26) is attached to the actuating device (25) and by means of the control lever (26) the valve disc (11) can be actuated to control the volume and the ventilating disc (14) can be actuated to control the temperature.

14. A sanitary mixing tap according to Claim 13, *characterized in that* the control lever (26) is supported in a cover consisting of a lower part (27) and an upper part (28) tightly sealing off the mixing tap and possesses in its central portion a ball unit (29) for the seating, that the lower end (30) of the control lever (26) is supported in a bush (31) that is rotatably held in an opening (32) of a carrier plate (33) resting against the cover and slidable in a straight line relatively to the cover, and that the carrier plate (33) is rigidly connected to the thermostatic control that forms a constructional unit comprising the valve disc 11 and is slidable on the valve seating disc (8).

15. A sanitary mixing tap according to Claim 14, *characterized in that* the carrier plate (33) is guided via projections (34) in elongated recesses (35) of the lower part (27) of the cover, that a yoke (36) overlapping the carrier plate (33) lies against the lower part (27) of the cover, that the yoke (36) is slidable in a straight line and for its guidance possesses elongated holes (37) for the passage of the projections (34) of the cover plate (33) and a central opening (38) for the reception of a flange (39) of bush (31) that is secured between the carrier plate (33) and the cover, that the flange (39) of the bush (31) is located off-centre relatively to the longitudinal axis of bush (31) and forms a circular-shaped eccentric, that by means of the eccentric the yoke (36) can be slid relatively to the valve disc (11), and that the yoke (36) engages the regulating disc (14) via the regulating unit (22) and the return spring (23).

16. A sanitary mixing tap according to one of Claims 10 to 15*, characterized in that* the cover is a component part of the cartouche (24).

17. A sanitary mixing tap according to one of Claims 10 to 16, *characterized in that* the cover and therewith the cartouche (24) are fastened into the mixing tap body (41) by means of a threaded ring (40).

18. A sanitary mixing tap according to one of Claims 10 to 17, *characterized in that* the cartouche (24) possesses a casing (43), provided with passage openings (42) for the water and the casing (43) is connected both to the lower part (27) of the cover and to the base (44) of the cartouche (24).

19. A sanitary mixing tap according to one of Claims 3 to 18, *characterized in that* the clamps (54) pass through the recesses (55) of the guide disc (15) and are firmly connected to the carrier plate (33).

20. A sanitary mixing tap according to one of Claims 9 to 19, *characterized in that* the clamps (54) pass through the recesses (55) of the valve disc (11) and possess at their bases linear guidance surfaces (56) for the constructional assembly of the valve disc (11), the regulating disc (14), the regulating unit (22), the return spring (23) and the guide disc (15), and the guidance surfaces (56) of the clamps (54) work in conjunction with corresponding guidance surfaces (57) at the base (44) of the cartouche (24).

21. A sanitary mixing tap according to Claim 20, *characterized in that* the guidance surfaces (57) at the base (44) of the cartouche (24) are constructed on a circumferential rib (58) tightly enclosing the valve seating disc (8) and the rib (58) protects the valve seating disc (8) from rotation.

22. A sanitary mixing tap according to Claim 20 or 21, *characterized in that* the guidance surfaces (56, 57) are part of a dovetail guide.

**Revendications**

1. Mélangeur sanitaire à réglage par thermostat, avec une amenée d'eau froide (5), une amenée d'eau chaude (6) et une amenée d'eau mélangée (7), avec un disque fixe (8) faisant office de siège de soupape, avec un disque (11) faisant office de soupape, apte à coulisser sur le disque (8) faisant office de siège de soupape à des fins de commande quantitative, avec un disque de réglage (14) apte à coulisser par rapport au disque (11) faisant office de soupape à des fins de commande et de réglage de la température, avec un disque de guidage (15) prévu au-dessus du disque de réglage (14)et avec un élément de réglage (22) agissant sur le disque de réglage (14) en fonction de la température, le disque (8) faisant office de siège de soupape présentant une ouverture (9) destinée à l'entrée de l'eau froide, raccordée à l'amenée d'eau froide (5) et une ouverture (10) destinée à l'entrée de l'eau chaude, raccordée à l'amenée d'eau chaude (6), le disque (11) faisant office de soupape présentant des ouvertures de pénétration (12, 13) qui communiquent avec l'ouverture (9) destinée à l'entrée de l'eau froide et l'ouverture (10) destinée à l'entrée de l'eau chaude pratiquées dans le disque (8) faisant office de siège de soupape, et le disque de réglage (14) présentant des ouvertures de pénétration (16, 17) communiquant avec les ouvertures de pénétration (12, 13) pratiquées dans le disque (11) faisant office de soupape, le disque de réglage (14) pouvant être réglé par rapport au disque (11) faisant office de soupape à des fins de commande de température pour prendre une position de départ qui détermine la température et pouvant être commandé à des fins de réglage de température au moyen de l'élément de réglage (22) dépendant de la température, **caractérisé en ce que** le disque (11) faisant office de soupape, le disque de réglage (14) et le disque de guidage (15) sont rassemblés en un paquet de disques et constituent une unité de montage apte à coulisser sur le disque (8) faisant office de siège de soupape et **en ce que,** entre le disque (11) faisant office de soupape et le disque de guidage (15), on prévoit des éléments d'écartement (53) et, de ce fait, on met en place un jeu minime d'ajustage entre le disque (11) faisant office de soupape et le disque de réglage (14) d'une part, et entre le disque de réglage (14) et le disque de guidage (15) d'autre part.

2. Mélangeur sanitaire selon la revendication 1, **caractérisé en ce que** le disque faisant office de soupape, le disque de guidage, ainsi que les éléments d'écartement sont réalisés de manière solidaire.

3. Mélangeur sanitaire selon la revendication 2, **caractérisé en ce que** le disque (11) faisant office de soupape et le disque de guidage (15) sont munis d'évidements (55), des brides de fixation (54) étant prévues et venant s'engrener dans les évidements (55) pratiqués dans le disque (11) faisant office de soupape et le disque de guidage (15).

4. Mélangeur sanitaire selon l'une quelconque des revendications 1 à 3, **caractérisé en ce que** le disque de guidage (15) présente des évidements (18) qui communiquent avec les ouvertures de pénétration (16, 17) pratiquées dans le disque de réglage (14), les sections transversales des évidements (18) pratiqués dans le disque de guidage (15) correspondant aux sections transversales des ouvertures de pénétration (12, 13) pratiquées dans le disque (11) faisant office de soupape et les évidements (18) pratiqués dans le disque de guidage (15) constituant des chambres de compensation de pression destinées à des quantités partielles de l'eau froide et de l'eau chaude, qui s'écoulent à partir des ouvertures de pénétration (12, 13) pratiquées dans le disque (11) faisant office de soupape, en passant par les ouvertures de pénétration (16, 17) pratiquées dans le disque de réglage (14) et par les évidements (18) pratiqués dans le disque de guidage (15), pour aboutir dans une chambre (20) réservée à l'eau.

5. Mélangeur sanitaire selon la revendication 4, **caractérisé en ce que** les ouvertures de pénétration (16, 17) pratiquées dans le disque de réglage (14) sont séparées l'une de l'autre par au moins une tige (21), la tige (21) coopérant avec des chambres de compensation de pression sous la forme d'évidements (19) pratiqués dans le disque (11) faisant office de soupape et dans le disque de guidage (15), destinées à des quantités partielles de l'eau froide et de l'eau chaude.

6. Mélangeur sanitaire selon la revendication 5, **caractérisé en ce que** les évidements (19) constituent, au moins partiellement, des chambres d'écoulement et sont reliés à la chambre (20) réservée à l'eau.

7. Mélangeur sanitaire selon l'une quelconque des revendications 1 à 6, **caractérisé en ce que** l'élément de réglage (22) dépendant de la température est disposé dans la chambre (20) réservée à l'eau et vient s'appliquer sur une extrémité du disque de réglage (14).

8. Mélangeur sanitaire selon la revendication 7, **caractérisé en ce que** l'extrémité du disque de réglage (14) éloignée de l'élément de réglage (22) dépendant de la température, est mise en état de précontrainte à l'intervention d'un ressort de rappel (23).

9. Mélangeur sanitaire selon les revendications 1 à 8, **caractérisé en ce que** l'élément de réglage (22) et le ressort de rappel (23) font également partie de l'unité de montage apte à coulisser.

10. Mélangeur sanitaire selon l'une quelconque des revendications 1 à 9, **caractérisé en ce que** le disque (8) faisant office de siège de soupape, le disque (11) faisant office de soupape, le disque de réglage (14), l'élément de réglage (22) au moins partiellement, éventuellement le ressort de rappel (23) et le disque de guidage (15) sont disposés dans une cartouche (24).

11. Mélangeur sanitaire selon la revendication 10, **caractérisé en ce que** l'élément de réglage (22) entoure au moins partiellement la cartouche (24).

12. Mélangeur sanitaire selon la revendication 11, **caractérisé en ce que** l'élément de réglage (22) est réalisé en un bimétal de forme arquée.

13. Mélangeur sanitaire selon l'une quelconque des revendications 1 à 12, **caractérisé en ce que** l'organe d'entraînement (25) peut basculer et pivoter, un levier de commande (26) étant fixé à l'organe d'entraînement (25), le disque (11) faisant office de soupape pouvant être entraîné à des fins de commande quantitative et le disque de réglage (14) pouvant être entraîné à des fins de commande de température, au moyen du levier de commande (26).

14. Mélangeur sanitaire selon la revendication 13, **caractérisé en ce que** le levier de commande (26) est monté dans un couvercle constitué par une partie inférieure (27) et par une partie supérieure (28), qui ferme le mélangeur de manière étanche et qui présente, dans sa zone médiane, un élément de bille (29) à des fins de logement, **en ce que** l'extrémité inférieure (30) du levier de commande (26) est montée dans une douille (31) maintenue en rotation dans une ouverture (32) pratiquée dans une plaque de support (33) qui vient s'appuyer contre le couvercle et qui peut coulisser en ligne droite par rapport au couvercle, et **en ce que** la plaque de support (33) est reliée à demeure au réglage par thermostat constituant une unité de montage, contenant le disque (11) faisant office de soupape et apte à coulisser sur le disque (8) faisant office de siège de soupape.

15. Mélangeur sanitaire selon la revendication 14, **caractérisé en ce que** la plaque de support (33) est guidée à l'intervention de saillies (34) dans des évidements longitudinaux (35) pratiqués dans la partie inférieure (27) du couvercle, **en ce que,** contre la partie inférieure (27) du couvercle, vient s'appuyer un étrier (36) qui enserre la plaque de support (33), **en ce que** l'étrier (36) peut coulisser en ligne droite et présente, à des fins de guidage, des trous oblongs (37) destinés à la pénétration des saillies (34) de la plaque de support (33), ainsi qu'une ouverture médiane (38) pour que vienne s'y loger une bride (39) de la douille (31), maintenue entre la plaque de support (33) et le couvercle, **en ce que** la bride (39) de la douille (31) est disposée de manière excentrique par rapport à l'axe longitudinal de la douille (31) et constitue un excentrique circulaire, **en ce que** l'étrier (36) peut coulisser par rapport au disque (11) faisant office de soupape au moyen de l'excentrique et **en ce que** l'étrier (36) vient s'appliquer contre le disque de réglage (14) à l'intervention de l'élément de réglage (22) et du ressort de rappel (23).

16. Mélangeur sanitaire selon l'une quelconque des revendications 10 à 15, **caractérisé en ce que** le couvercle est une partie constituante de la cartouche (24).

17. Mélangeur sanitaire selon l'une quelconque des revendications 10 à 16, **caractérisé en ce que** le couvercle et, par conséquent, la cartouche (24) sont fixés dans le corps (41) du mélangeur au moyen d'un anneau fileté (40).

18. Mélangeur sanitaire selon l'une quelconque des revendications (10 à 17), **caractérisé en ce que** la cartouche (24) présente une douille munie d'ouvertures de pénétration (42) destinées à l'eau, la douille (43) étant reliée aussi bien à la partie inférieure (27) du couvercle qu'au fond (44) de la cartouche (24).

19. Mélangeur sanitaire selon l'une quelconque des revendications 3 à 18, **caractérisé en ce que** les brides de fixation (54) traversent les évidements (55) pratiqués dans le disque de guidage (15) et sont reliées à demeure à la plaque de support (33).

20. Mélangeur sanitaire selon l'une quelconque des revendications 9 à 19, **caractérisé en ce que** les brides de fixation (54) traversent les évidements (55) pratiqués dans le disque (11) faisant office de soupape et présentent, du côté inférieur, des surfaces de guidage en ligne droite (56) destinées à l'unité de montage constituée par le disque (11) faisant office de soupape, par le disque de réglage (14), par l'élément de réglage (22), par le ressort de rappel (33) et par le disque de guidage (15), les surfaces de guidage (56) des brides de fixation (54) coopérant avec des surfaces de guidage correspondantes (57) disposées au fond (44) de la cartouche (24).

21. Mélangeur sanitaire selon la revendication 20, **caractérisé en ce que** les surfaces de guidage (57) disposées au fond (44) de la cartouche (24) sont réalisées contre une nervure périphérique (58) qui entoure directement le disque (8) faisant office de siège de soupape, la nervure (58) garantissant le disque (8) faisant office de siège de soupape, contre la torsion.

22. Mélangeur sanitaire selon la revendication 20 ou 21, **caractérisé en ce que** les surfaces de guidage (56, 57) font partie d'un guidage en queue d'aronde.

Fig.1

Fig. 2

Fig. 3

Fig.4